# EUROPEAN PATENT APPLICATION

(11) **EP 0 693 813 A1**
(43) Date of publication of application: **24.01.1996**
(21) Application number: 94305428.8
(22) Date of filing: 22.07.1994
(51) Int. Cl.: H02J 7/00, G07F 7/06

(54) **Battery vending system**

(71) Applicant: Yang, Chen-Chi, Chia-Yi City (TW)
(72) Inventor: Yang, Chen-Chi, Chia-Yi City (TW)
(74) Representative: Linn, Samuel Jonathan

(57) **Abstract**

A battery vending system including a monitoring main frame (1) for controlling charging batteries, calculation and receipt, and a plurality of battery vending devices (2) connected thereto. The battery vending devices (2) each have a battery in-slot (25) and battery out-slot (25a), an element (28) for identifying the specification of batteries, a charger (21) and a convey device (20) which has a multiplicity of batteries (26) placed thereon. Each battery is recharged during off-peak hours of power consumption and batteries are sold or exchanged during normal hours via the battery in-slot (25) and out-slot (25a) through the control of the monitoring main frame (1) to achieve the objects of storing energy during off-peak hours of power consumption and supplying or exchanging batteries at any time.

## Description

The present invention relates generally to a battery vending system, and more particularly to a system in which charged batteries are served any time and empty batteries stored in the system are recharged during off-peak hours of power consumption.

Since electric energy is less likely to cause air pollution, electric vehicles are receiving more and more attention, and advanced countries are putting more effort on developing electric motorcycles, electric automobiles, etc. With the sudden increase in the demand for batteries and in view of the problem that electric vehicles cannot travel long distance, many manufacturers are researching on and developing quick charge devices to provide speedy recharge service for equipment or machines utilizing batteries as a power source; these include Japan Storage Battery Co., Ltd., The Kansai Electric Power Co., Inc., and Corporation for Utilization by Osaka City Government. They offer quick charge devices which achieve 80% of the charged energy within 30 minutes the soonest. But since consumers still have to wait for at least 30 minutes, such devices cannot actually be said to be quick and convenient.

As is commonly known, the chief reason why power generation technology is constantly being developed to increase power output and new power plants are constantly being established is that power consumption during daytime peak hours rises drastically, while power consumption during off-peak hours does not likewise increase. If power consumption during daytime peak hours can be distributed to off-peak hours, it will be of great benefit to the power generation system. That is why power institutions all over the world encourage consumers to utilize electric power during off-peak hours by offering cheaper power rates. However, due to the lack of practically feasible devices to allow consumers to utilize power during off-peak hours, the distribution of peak power consumption has little effect. The above-mentioned quick charge devices evidently do not make good use of electric energy during off-peak hours.

At present, the principal units that make good use of off-peak power are power storage plants in power generation institutions. These storage plants store energy during off-peak hours to output it during peak hours. However, there is much loss of power during the process of storage and supply; for instance, 10,000 kilowatts of power stored in the storage plants may have only 8,000 kilowatts of power remained when released, and this loss of power occurs before power is supplied to end users, obviously not a good solution in terms of economic profits.

Therefore, the primary object of the present invention is to provide a battery vending method for selling charged batteries or exchanging charged batteries with empty batteries which are later automatically recharged at a preset time.

Preferably, another object of the present invention is to provide a method and apparatus for automatically recharging batteries stored in the apparatus during off-peak hours of power consumption, wherein the apparatus has stored therein a number of charged batteries to be directly supplied to consumers, and a monitoring main frame controls the operation of charging each empty battery in the apparatus during off-peak hours of power consumption.

Preferably, a further object of the present invention is to provide a battery vending apparatus for automatically supplying charged batteries stored therein to consumers.

Preferably, a still further object of the present invention is to provide a battery exchange device for exchanging charged batteries stored therein with batteries to be recharged supplied by consumers.

Preferably, still another object of the present invention is to provide a quick charger adapted for use in conjunction with any of the system, apparatus and devices mentioned above.

According to the present invention, the battery vending system comprises a plurality of battery vending devices for storing, charging, and conveying batteries, and which are controlled by a monitoring computer to proceed recharging empty batteries stored therein during off-peak hours of power consumption, and the batteries are automatically sold to consumers on the conditions of payment by coin, card, etc. The system may further include a quick charger to provide quick charge service to consumers who may need it.

The foregoing and other features and advantages of the present invention will be more clearly understood from the following detailed description and the accompanying drawings, in which,
Fig. 1 is a system diagram of the monitoring main frame of the present invention;
Fig. 2 is a plan view of a preferred embodiment of the battery vending apparatus of the present invention;
Fig. 3 is a partial side view of Fig. 2 taken along line 3-3;
Fig. 4 is a sectional view of Fig. 3 taken along line 4-4;
Fig. 5 is a plan view of a second preferred embodiment of the battery vending apparatus of the present invention; and
Fig. 6 is a plan view of a third preferred embodiment of the battery vending apparatus of the present invention.

The battery vending system according to the present invention provides automatic sale and exchange of batteries. When the user operates the system and keys in data in accordance with the preset conditions of the vending system, it will provide a charged battery. The vending system comprises:
(1) Storing a multiplicity of charged batteries in at least one battery vending device of a battery vending apparatus comprising the vending device and a monitoring main frame having a central processing unit for prestoring control programs, the battery vending device having a battery in-slot and a battery out-slot, and the monitoring main frame being connected to an operation device, an identification element, a convey device and a charger;
(2) Transmitting an operation signal to the central processing unit via the operation device when the user operates the system;
(3) Identifying the identity of a battery to be recharged disposed in the battery in-slot by the user by means of the identification element, and sending an identification signal to the central processing unit;
(4) Comparing the operation signal and the identification signal with prestored data in the central processing unit, and
(5) Initiating the convey device to deliver a charged battery to the battery out-slot when the operation data and the identification data fit in with the prestored data in the central processing unit after comparison.

A further step may also be included to collect said battery to be recharged disposed in said battery in-slot by the user onto said convey device at the time when said battery out-slot delivers a charged battery.

The above-mentioned operation device comprises coin payment means and card payment means. If necessary, the operation device may also comprise a keyboard for keying in certain data, and a display for indicating the operation result.

If a further step of setting the time to start charging empty batteries is included in the above-described system so that the charger starts charging each empty battery stored in the automatic vending device during off-peak hour of power consumption, the balancing effect of distributing peak power consumption may be achieved. Obviously, it is often necessary to include a still further step of providing a quick charger in the system so that the quick charge device may exist outside of the control programs of the central processing unit to provide quick charge service to consumers at any time.

Hereinbelow, preferred embodiments are used to illustrate the ways of utilizing the present invention and its advantages.

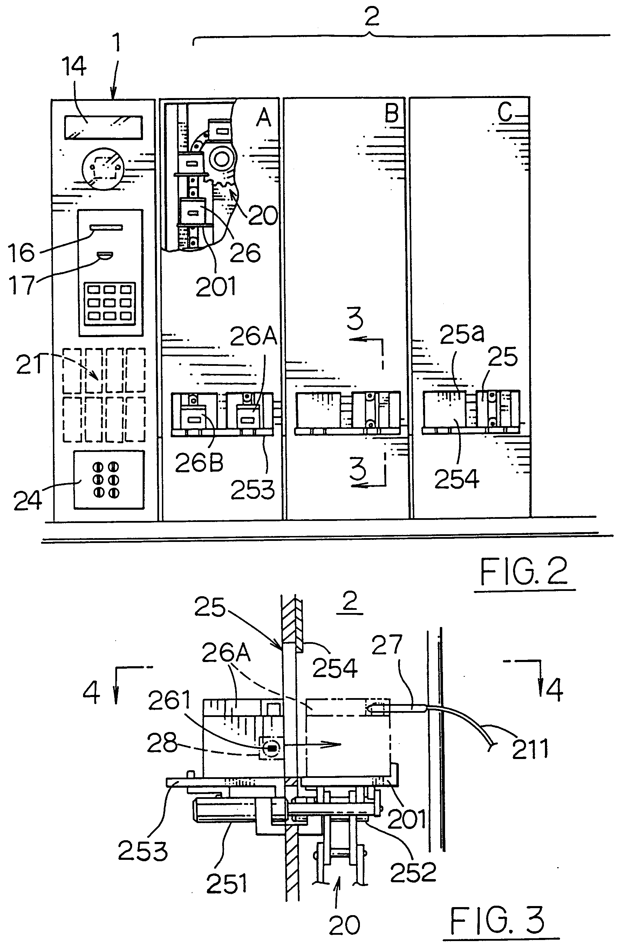

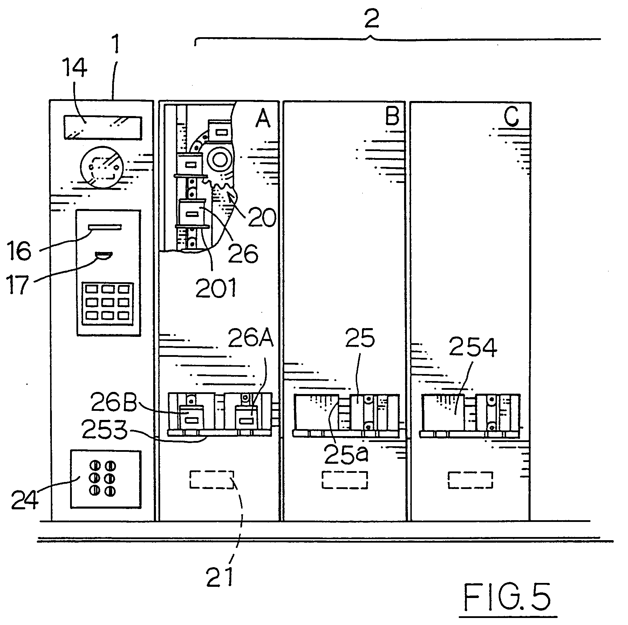

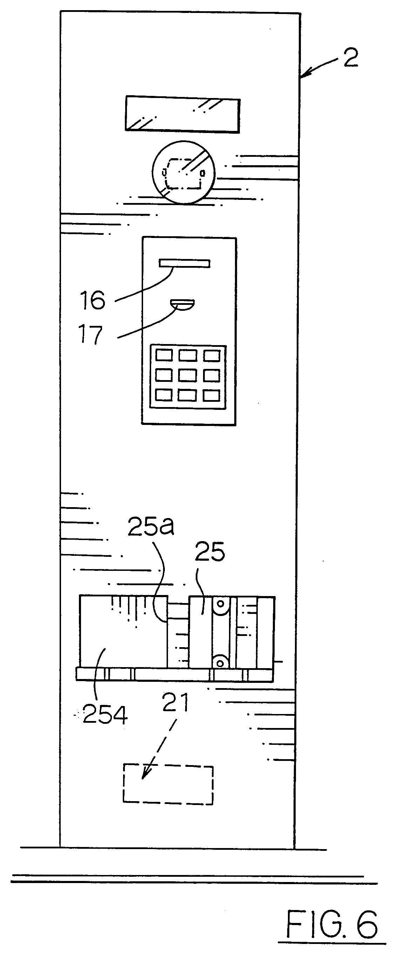

The battery vending apparatus according to the present invention mainly comprises a monitoring main frame 1, at least one battery vending device 2, and a charger 21. Fig. 2 shows a first preferred embodiment of the present invention in which the monitoring main frame 1 is connected to a plurality of vending devices 2, wherein a plurality of chargers 21 the number thereof corresponding to the number of vending devices 2 are disposed in the monitoring main frame 1. In another preferred embodiment shown in Fig. 5, each charger 21 is disposed in its corresponding vending device 2. A third embodiment is shown in Fig. 6, in which the monitoring main frame and the vending device are combined into a single unit.

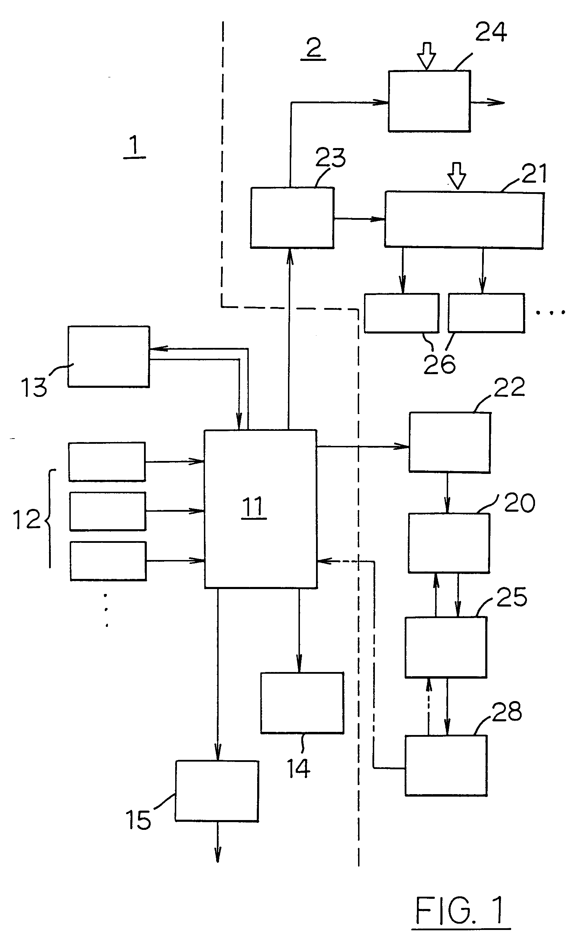

The monitoring main frame 1 monitors charging time, charging conditions, charging cycle, fee calculation, receipt, input and display of relevant data, etc. An example of one of the control flowcharts of the vending system is shown in Fig. 1.

As shown in Fig. 1, the monitoring main frame 1 is provided with a central processing unit 11 having an intelligent electricity meter. The central processing unit 11 compares input data such as identification data, time data and payment data with preset data 13 and then processes, calculates and displays the result obtained. When the input data fit in with the preset data, the central processing unit 11 subsequently sends a signal to a convey device 20 in the battery vending device 2 to collect a battery to be recharged placed in a battery in-slot 25 by the user and to deliver a charged battery to a battery out-slot 25a, and the central processing unit simultaneously controls a switch 22 to open a door 254 of the battery out-slot 25a for the user to collect the required battery. The central processing unit 11 also controls the on/off state of a switch 23 of the charger 21 to operate at a preset time so that only a quick charger 24 provides charge service at any time.

The monitoring main frame 1 may also be provided with card payment means 16 and coin payment means 17, and the operating conditions, such as local standard time, card data, amount calculated, code number of the battery vending device and its on/off state, etc., may be indicated by a display 14. These data may also be collected via a communication interface 15 to a particular control center for upstream monitoring.

With reference to Figs. 2, 3 and 4, the battery vending device 2 comprises the charger 21 and the convey device 20. A preferred embodiment of the convey device 20 is, as shown in Fig. 2, an O-shaped chain belt which moves cyclically along a predetermined path, and the battery in-slot 25 and battery out-slot 25a are both arranged at a suitable point thereon. The vending device 2 stores a large number of batteries 26 so that they may be recharged during off-peak hours of power consumption, or during a preset period from twelve midnight to 6 am, for instance. The batteries 26 are disposed on their corresponding cope plates 201 along the convey device 20. The connection between each battery 26 and the charger 21 may be manual or automated. Similarly, the battery in-slot and out-slot may be configured to be a single opening for receiving as well as delivering batteries. In the preferred embodiments shown in Figs. 2 through 6, the battery in-slot and out-slot share a single plate 253 upon which batteries are placed.

In the following description, an example of automatic process is used to illustrate the present invention, but in whatever cases, the battery vending device 2 is controlled by the monitoring main frame 1. Generally, all the stored empty batteries are recharged only during off-peak hours, or during a preset period from twelve midnight to six a.m. Furthermore, when the amount of empty batteries stored in the vending device 2 is full, the vending device 2 will not accept any more batteries to be recharged; additionally, when all the empty batteries are not completely recharged, the battery vending device 2 will not deliver any battery. Obviously, the present invention provides a series of battery vending devices, such as vending devices A, B and C shown in Figs. 2 and 5, for storing a large number of charged batteries, and the availability of batteries stored in each vending device 2 is indicated by the display 14.

It is preferable to provide an identification element 28, such as a photo-sensor, in the battery in-slot 25 for discerning whether the battery placed therein by the user fits the charging specification; the specification (to be described hereinbelow) may be checked by the photo-sensor and the result obtained transmitted to the monitoring main frame 1.

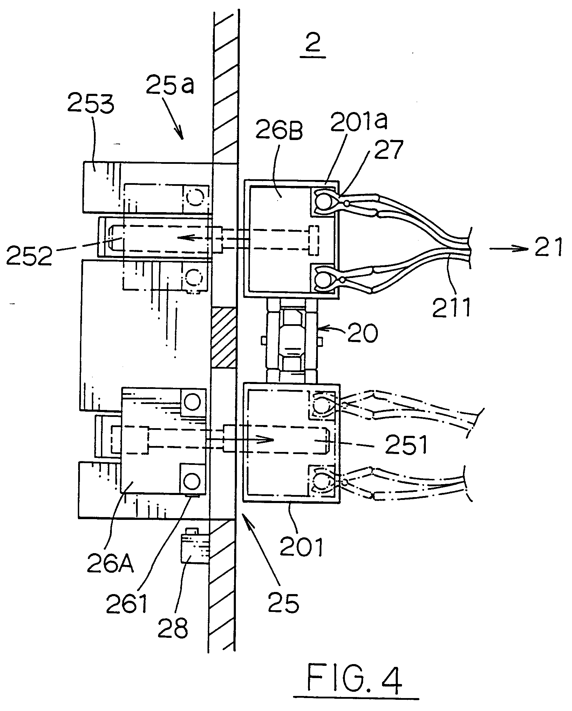

The present invention further provides a battery with an identity number and particular specification. This type of batteries have a uniform identity number 261. As shown in Fig. 4, the identity number 261 may be stuck onto the side of the battery by means of a code label. When a battery to be recharged is placed in the in-slot 25, the identification element 28 reads the code label and then sends the data signal acquired to the central processing unit 11 to be compared with the preset data to determine whether the battery matches the charger 21 of the present invention, if not, then the display 14 will notify the user, restrict the convey device 20 from rotating and prevent the door 254 of the battery out-slot 25a from opening so that the user cannot collect a charged battery, unless the user pays up the amount for "new battery" or "purchase."

The battery identity number may also be used to calculate the accumulated charging cycles and charge hours of the battery so that when a predetermined value is exceeded the battery is disposed of to maintain high battery quality supplied by the automatic battery vending device.

If a battery 26A to be recharged is recognized by the identification element 28, the monitoring main frame 1 sends a command to a displacement means consisting of, for example, a first press element 251 and a second press element 252. The battery 26A is pushed by the first press element 251 onto an empty cope plate 201 of the convey device 20 and which aligns with the plate 253 of the battery in-slot 25, while the second press element 252 utilizes the oil pressure of the back-flow of the first press element 251 to push a charged battery 26B on another cope plate 201a on the other side of the convey device 20, the cope plate 201a also aligning with the plate 253 of the battery out-slot 25a, onto the plate 253 of the battery out-slot 25a. When the battery 26A to be recharged is positioned on the cope plate 201, its battery terminals are then respectively connected to two charging chucks 27 of the opposite polarity; these charging chucks 27 are collectively linked to the charger 21. At this time, the convey device 20 displaces a predetermined distance so that another stored charged battery on its respective cope plate aligns with the plate 253 of the battery out-slot 25a, and another empty cope plate of the convey device 20 also aligns with the plate 253 of the battery in-slot 25 to prepare for collecting another battery to be recharged. When all the charged batteries in one vending device 2 are totally removed, then another vending device 2 takes the turn of performing the same operation. When it is off-peak hours of power consumption, the monitoring main frame 1 automatically activates the charger 21 to start charging the empty batteries in the corresponding vending device 2.

The manner of connection between the charging chucks 27 and the charger 21 may be by means of a bundle of cables 211, as shown in Fig. 4, or by means of an electric brush or other method of conduction. Obviously, if cables 211 are used as connection, the central processing unit 11 will control the convey device 20 to rotate one cycle and then counter-rotate to return to its original position in order to prevent the cables 211 from breaking due to continuous rotation in one single direction. Other similar techiques are considered to be details of the present invention and are not discussed in detail herein.

By means of the system of the present invention, empty batteries to be recharged are collectively recharged during off-peak hours of power consumption to achieve the object of energy storage; besides, the users do not have to wait for a long time and may exchange empty batteries for charged batteries after payment. As described above, a separate quick charger 24 (see Fig. 2) of the conventional type may also be provided in the present system to recharge batteries not in accordance with the particular battery specification of the present system. In view of the above, the present invention has the advantages of storing energy during off-peak hours of power consumption, easy operation and automatic recharge of batteries to supply charged batteries at any time. These features of the present invention are not disclosed in any prior art.

Although the present invention has been illustrated and described with reference to the preferred embodiments thereof, it should be understood that it is in no way limited to the details of such embodiments, but is capable of numerous modifications within the scope of the skilled person.

## Claims

1. A battery vending system for selling and exchanging batteries in which when a user operates said vending system and keys in data in accordance with preset conditions stored in said vending system, said system then supplies a charged battery, said vending system comprising the followings steps of:
Storing a plurality of charged batteries in at least one battery vending device of a battery vending apparatus comprising said vending device and a monitoring computer having a central processing unit for prestoring control programs, and said monitoring computer being connected to an operation device, an identification element, a convey device and a charger;
Transmitting an operation signal to said central processing unit via said operation device when the user operates said system;
Identifying the identity of a battery to be recharged and sending an identification signal to said central processing unit;
Comparing said operation signal and said identification signal with prestored data in said central processing unit, and
Initiating said convey device to deliver a charged battery after comparison.

2. The battery vending system as claimed in claim 1, comprising an additional step of:
Collecting said battery to be recharged disposed in a battery opening onto said convey device at the time when said battery opening delivers a charged battery.

3. The battery vending system as claimed in claim 1, comprising an additional step of:
Charging each of said batteries stored in said battery vending device by means of said charger.

4. The battery vending system as claimed in claim 3, wherein said charger starts charging each of said batteries in said battery vending device at a preset time.

5. The battery vending system as claimed in any of the above claims, comprising an additional step of:
Providing a quick charger in said battery vending apparatus, said quick charger being separately provided outside of the control programs of said central processing unit.

6. The battery vending system as claimed in any of the above claims, wherein said operation device comprises coin payment means and card payment means, a keyboard for data input, and a display for indicating operation results.

7. A battery vending apparatus utilizing off-peak power to store energy, said apparatus comprising:
a monitoring computer for processing and displaying various data, said computer outputting a control signal after processing; and
at least one battery vending device connected to said monitoring computer, said vending device having a charger disposed therein and a convey device moving along a predetermined path, a battery opening being disposed at a suitable position on said path for receiving batteries to be recharged and supplying stored charged batteries, said battery opening being provided with an identification element for identifying the specification of a battery to be recharged and transmitting the identification result to said monitoring computer, wherein said convey device is controlled by said control signal from said monitoring computer to rotate, and batteries to be recharged accepted into said battery vending device are connected to said charger the switch thereof being controlled by said control signal from said monitoring computer.

8. The battery vending apparatus as claimed in claim 7, wherein a cope plate on said convey device aligns with a plate of said battery opening.

9. The battery vending apparatus as claimed in claim 7 or claim 8, wherein said monitoring computer is provided with a communication interface for gathering data of said monitoring computer to a control center.

10. The battery vending apparatus as claimed in any one of claims 7 to 9, wherein said monitoring computer is provided with card or coin payment means.

11. The battery vending apparatus as claimed in any one of claims 7 to 10, further comprises a quick charger.

12. The battery vending apparatus as claimed in any one of claims 7 to 11, wherein said battery vending device further comprises a displacement means which is controlled by said control signal from said monitoring computer to move a battery to be recharged placed in said battery opening onto an empty cope plate adjacent thereto and to move a charged battery on another cope plate adjacent to said battery opening to the plate of said battery opening.

13. The battery vending apparatus as claimed in any one of claims 7 to 12, wherein said charger is disposed in said monitoring computer.

14. The battery vending apparatus as claimed in any one of claims 7 to 13, wherein said monitoring computer and said battery vending device are formed into one single unit.
